# EUROPEAN PATENT APPLICATION

(11) **EP 1 650 472 A2**
(43) Date of publication of application: **26.04.2006**
(21) Application number: 05109443.1
(22) Date of filing: 11.10.2005
(51) Int. Cl.: F16G 1/28

(54) **Apparatus and method for controlling rubber flow in positive drive belts**

(30) Priority: 20.10.2004 US 970803
(71) Applicant: THE GOODYEAR TIRE & RUBBER COMPANY, Akron OH 44316-0001 (US)
(72) Inventor: Billups, Wesley James, Lincoln NE 68507 (US)
(74) Representative: Kutsch, Bernd

(57) **Abstract**

A positive drive belt (10) is provided which comprises a tension section (20) and a tooth section, which has a cushion section (28), and a load carrying section. A fabric layer (22) is disposed between the tension section (20) and the load carrying section (23). The tension section (20) may be a first compound and the load carrying section (23) may be a second compound. The fabric layer (22) is adapted to prevent intermixing of the first compound and the second compound during an associated cure cycle. As such, a positive drive belt (10) may be formed with two different compounds and formed in a single curing cycle.

## Description

### Field of Invention

This invention pertains to positive drive belts and to a method to manufacture such belts. More specifically, the present invention relates to a belt where fabric is placed between the tension portion of the belt and the teeth during the building stage to control flow of rubber during a curing cycle.

### Description of the Related Art

Development in both the automotive and industrial marketplace has resulted in more demanding requirements for power transmission belts. As such, power transmission belts, also known as positive drive belts, have been required to operate under higher loads and at higher tensions, while reducing belt width. Based on the foregoing, there are demands for a high quality belt capable of withstanding these severe applications.

In order to meet the demands for positive drive belts, it is desirable to reduce the occurrence of belt failure. Two major modes of failure exist for positive drive belts. First, the tooth compound does not have a high enough modulus of elasticity to carry the load applied to the belt and the teeth tear off the belt due to shear forces. Second, the modulus of elasticity for the tension section compound is too high, resulting in belt cracks. This leads to tensile failure. Based upon the foregoing, a belt design is needed, which balances optimal tooth stiffness and flexibility in the tension section.

In order to reach this balance, it is common to utilize different materials in the tooth and tension sections of the belt in order to provide greater flexibility in the tension section and greater stiffness in the tooth region. Ideally, a very rigid compound would be used for the teeth and a soft compound for the tension section. While this may be simple for other types of belts, it is difficult in positive drive belts because the tooth compound must flow around the cords during the molding process. As such, it is difficult to prevent intermixing of the two compounds in positive drive belts. Until now, the only method for accomplishing this is to preform the belt teeth and then assemble the cord on top of the preformed matrix. While this enables different compounds to be used for the teeth and tension sections, it has inherent problems. First, cord adhesion is poor since the compound does not have to flow completely around the cord during cure. Second, preforming teeth is expensive because it adds another processing step in the manufacturing process.

The present invention provides a method for enabling a positive drive belt to be cured during a single curing cycle and yet be formed from two different rubber compounds, such that the rubber compounds do not intermix during curing. By reducing the occurrence of failure, positive drive belt life is optimized and overall costs are reduced by requiring fewer belt replacements.

### Summary of the Invention

According to one aspect of the present invention, a positive drive belt, also known as a power transmission belt, according to claim 1 is provided.

Another object of the present invention is to provide a positive drive belt, wherein the tension section may be a first compound; the load carrying section may be a second compound, and the fabric layer may be adapted to prevent intermixing of the first compound and the second compound during an associated cure cycle.

Another object of the present invention is to provide a positive drive belt, wherein the first compound has a first modulus of elasticity and the second compound has a second modulus of elasticity, the second modulus of elasticity being greater than the first modulus of elasticity.

Further, another object of the present invention is to provide a positive drive belt, which may further comprise a coated fabric layer disposed on the cushion section.

Still yet, another object of the present invention is to provide a positive drive belt, wherein the belt may have one driving surface.

Still, another object of the present invention is to provide a positive drive belt, wherein the first modulus of elasticity may be 300 psi.

Further, another object of the present invention is to provide a positive drive belt, wherein the second modulus of elasticity is 2000 psi.

Yet, another object of the present invention is to provide a positive drive belt, wherein the fabric layer may be 0.3-oz/square yard spun-bond Nylon.

Further yet, another object of the present invention is to provide a positive drive belt, wherein the cushion section may further comprise a plurality of cords disposed in the cushion section.

Another object of the present invention is to provide a positive drive belt according to claim 7.

Further, another object of the present invention is to provide a positive drive belt, wherein the barrier may be a fabric layer.

Further yet, another object of the present invention is to provide a positive drive belt, wherein the tooth section may further comprise a load bearing section and a cushion section.

Yet, another object of the present invention is to provide a positive drive belt, wherein the fabric layer may be bonded between the tension section and the load bearing section.

Another object of the present invention is to provide a method for forming a positive drive belt according to claim 8.

Another object of the present invention is to provide a method for forming a positive drive belt, wherein the step of simultaneously curing the first compound and the second compound may further comprise the step of curing a coated fabric layer to the second compound.

One advantage of this invention is that it reduces premature belt failure by preventing intermixing of two rubber compounds.

Another object of the present invention to provide a positive drive belt that is economical to manufacture.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a perspective view of the present invention.
FIGURE 2 is a side view of FIGURE 1.

### Description of the Preferred Embodiment

Referring now to the drawings wherein the showings are for purposes of illustrating a preferred embodiment of the invention. An endless positive drive belt structure or belt 10 of may be adapted to be used in associated sprockets in accordance with techniques known in the art. The belt 10 is particularly suited for use in automotive and industrial applications.

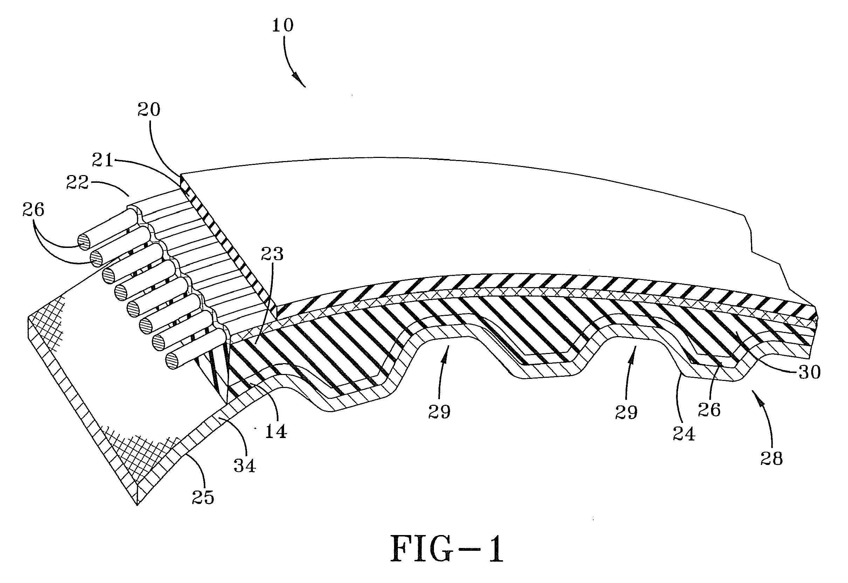

With reference to FIGURE 1 the belt 10 comprises a tension section 20, and a tooth section 25. The tooth section 25 comprises a cushion section 28 and a load-carrying section 23. The load-carrying section 23 is disposed between the tension section 20 and cushion section 28. A load-carrying section 23 has load-carrying means in the form of load-carrying cords 26 or filaments which are suitably embedded in an elastomeric cushion or matrix in accordance with techniques which are well known in the art. The cords 26 or filaments may be made of any suitable material known and used in the art. Representative examples of such materials include aramids, fiberglass, nylon, polyester, cotton, steel, carbon fiber and polybenzoxazole. With continuing reference to FIGURE 1, the belt 10 also has an inside ply or inner fabric layer 22 disposed between the tension section 20 and the load carrying section 23. In the embodiment shown in FIGURE 1, the belt 10 has a series of spaced cogs or teeth 24 and alternating land portions 29 of the belt 10.

With continuing reference to FIGURE 1, the tension section 20 may be formed from a first compound 21. Further, load-carrying section 23 of the tooth section 25 may be formed from a second compound 30. The fabric layer 22 forms a barrier between the tension section 20 and the load carrying section 23 to prevent intermixing of the first compound 21 and the second compound 30 during a curing cycle. The cushion section 28 may also be formed from the second compound 30.

The first compound 21 has a first modulus of elasticity, which may range from 100 to 1500 psi. Further, the second compound 30 has a second modulus of elasticity, which may range from 1000 to 4000 psi. In the present invention, in order to increase belt life by providing stiffer teeth 24 and a more flexible tension section 20, the second modulus of elasticity should be greater than the first modulus of elasticity.

The fabric layer 22 may be made from a bi-directional, non-woven, woven or knitted fabric. Also, the fabric layer 22 may be frictioned, spread or coated with an elastomeric material which is selected to assure the layer is bonded to its associated section in a tenacious manner. The fabrics for use in the present invention are made of conventional materials including nylon (such as nylon 4,6, nylon 6,6 and nylon 6), cotton, polyester, cotton/polyester, nylon/polyester, cotton/nylon, Lycra™ (segmented polyurethane), aramid, rayon, and the like. Preferably, the fabric may be made of 0.1-2.0, and preferably 0.3-oz/square yard spun-bond Nylon.

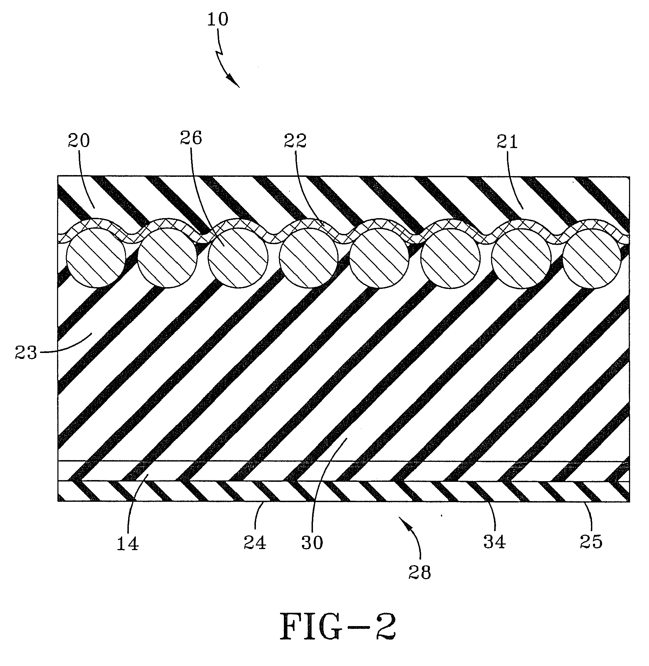

With reference to FIGURE 2, another embodiment of the positive drive belt 10 is shown, which is similar to that previously described. The belt 10 comprises a tension section 20, a cushion section 28, and a load-carrying section 23. The load-carrying section 23 has load-carrying means in the form of load-carrying cords 26 or filaments as previously described. Further, the tension section 20 may be formed of the first compound 21 and the cushion section 28 and load-carrying section 23 may be formed of the second compound 30. The fabric layer 22 is disposed between the tension section 20 and the load-carrying section 23.

It is contemplated that the belt of the present invention also include those belts where the drive surface of the belt may be single V-grooved and multi-V-grooved.

The rubber compositions for use in the tension section 20 and cushion section 28 should be different in order to increase belt life. For example, with reference to FIGURE 1, using the first compound 21 in the tension section 20 and the second compound 30 in the tooth section 25 enables greater tooth stiffness in the tooth section 25 and greater flexibility in the tension section 20. Conventional elastomers which may be used in one or both of these sections include natural rubber, polychloroprene, acrylonitrile-butadiene copolymers (NBR), polyisoprene, zinc salts of unsaturated carboxylic acid ester grafted hydrogenated nitrile butadiene elastomers, styrene-butadiene rubbers, polybutadiene, EPDM, hydrogenated acrylonitrile-butadiene copolymers (HNBR), polyurethane, elastomers marketed under the Viton™ designation and ethylene-acrylic elastomers sold under the name VAMAC and blends thereof.

The positive drive belt may be made from material chosen in accordance with sound engineering judgment, including, but not limited to hydrogenated nitrile rubber and chlorosulfonated polyethylene. In addition, solid lubricants have been added to the rubber compositions to improve the abrasion properties of the belt by reducing the coefficient of friction.

In order to form a positive drive belt, a mold is provided to form the positive drive belt. The first compound and second compound are also provided. The fabric layer is disposed between the first compound and the second compound. The first compound and the second compound are simultaneously cured. Intermixing is prevented of the first compound and the second compound. The first compound forms the tension section of the belt. The second compound forms the tooth section of the belt. The belt is then removed from the mold. Further, a coated fabric layer may be cured on said second compound.

During development of the instant invention, belt samples were fabricated. A soft tan compound was used in the tension section and a rigid dark compound was used in the tooth section. One set of belts had the fabric layer disposed between the tension section and the tooth section. With respect to the belt samples without the fabric layer, the soft tan compound intermixed with the rigid dark compound. With respect to the belt samples with the fabric layer, the soft tan compound attempted to break through and intermix with the tooth section, but it was held back by the fabric layer.

## Claims

1. A positive drive belt comprising:
a tension section (20);
a cushion section (28);
a load carrying section (23) disposed between said tension section (20) and said cushion section (28); and
a fabric layer (22) disposed between said tension section (20) and said load-carrying section (23).

2. The positive drive belt of claim 1, wherein said tension section (20) is a first compound (21), said load carrying section (23) is a second compound (30), and wherein said fabric layer (22) is adapted to prevent intermixing of said first compound (21) and said second compound (30) during an associated cure cycle.

3. The positive drive belt of claim 2, wherein said first compound (21) has a first modulus of elasticity and said second compound (30) has a second modulus of elasticity, said second modulus of elasticity being greater than said first modulus of elasticity.

4. The positive drive belt of at least one of the previous claims, further comprising a coated fabric layer (22) disposed on said cushion section (28).

5. The positive drive belt of claim 3, wherein said first modulus of elasticity is 100-1500 psi and/or wherein said second modulus of elasticity is 1000-4000 psi.

6. The positive drive belt of at lest one of the previous claims, wherein said cushion section (28) further comprises a plurality of cords (26) disposed in said cushion section (28).

7. A positive drive belt, comprising:
a tension section (20) made from a first compound,
a tooth section made from a second compound; and
a barrier (22) positioned between said tooth section and said tension section (20), said barrier (22) adapted to prevent intermixing of said first compound and said second compound during an associated cure cycle.

8. A method for forming a positive drive belt, the method comprising the steps of:
providing a mold to form said positive drive belt (10);
providing a first compound (21), a second compound (30), and a fabric layer (22) disposed between said first compound (21) and said second compound (30);
simultaneously curing said first compound (21) and said second compound (30);
preventing intermixing of said first compound (21) and said second compound (30); forming a tension section (20) of said belt (10) with said first compound (21);
forming a tooth section (25) of said belt (10) with said second compound (30); and
removing said cured belt (10) from said mold.

9. The method of claim 8, wherein the step of simultaneously curing said first compound (21) and said second compound (30) further comprises the step of curing a coating layer on said second compound (30).

10. The method of claim 8 or 9, wherein said first compound (21) has a first modulus of elasticity and said second compound (30) has a second modulus of elasticity, said second modulus of elasticity being greater than said first modulus of elasticity.
